# EUROPEAN PATENT APPLICATION

(11) **EP 2 051 549 A1**
(43) Date of publication of application: **22.04.2009**
(21) Application number: 07118799.1
(22) Date of filing: 18.10.2007
(51) Int. Cl.: H04W 4/00, H04L 12/24

(54) **Roaming broker and network interworking control gateway**

(71) Applicant: Nokia Siemens Networks Oy, 02610 Espoo (FI)
(72) Inventor: Kappler, Cornelia, 10587 Berlin (DE); Pampu, Cornel, 13437 Berlin (DE); Tionardi, Laurensius, 10825 Berlin (DE)
(74) Representative: TBK-Patent

(57) **Abstract**

An apparatus provides roaming broker functionality. The apparatus comprises a negotiation controller for negotiating a roaming agreement between an originating network and a destination network. The apparatus further comprises a rule generator generating rules according to a negotiated roaming agreement, and a configuration unit configured to implement configuration settings according to respective rules generated by the rule generator.

## Description

### Field of the Invention

The present invention relates to an apparatus and method which perform functionalities of a roaming broker, a network interworking control gateway, and a network interworking control gateway proxy, respectively.

### Related Background Art

Roaming is an important functionality supported in mobile networks. It means that a subscriber of a first network (his home network) is reachable in another (second) network (the visited network). In other words, a subscriber is able to use his mobile terminal also when outside the coverage of his home network.

The visited network and the home network are usually connected by a backbone network, the GRX (GPRS Packet Exchange; GPRS: general packet radio service) or the IPX (IP Exchange; IP: internet protocol). Traffic due to roaming thus travels from the visited network via the GRX (or IPX) to the home network.

The following are the typical actions performed, when a roaming subscriber uses a visited network. Firstly, the roaming subscriber is authenticated and authorized on the basis of information located in his home network. That is, the appropriate network element in the visited network such as a SGSN (serving GPRS support node) or an AAA (authenticating authorization and accounting) proxy server pulls information and decisions from the corresponding element in the home network, for example from a HLR (home location register) or an AAA server. Next, the roaming subscriber prepares to send data. In many cases, this involves setting up a tunnel to the home network. For example, this could be an IPsec (secure internet protocol) tunnel between an access router and a packet data gateway (PDG) or a GTP (GPRS tunnel protocol) tunnel between SGSN and a GGSN (gateway GPRS support node), if the GGSN is located in the home network. Then, the billing and charging is done by the home network based on information collected both in visited network and home network.

Evidently, home network and visited network need a contractual relationship in order for the visited network to accept roaming subscribers. These contracts are called roaming agreements (RoAs). Roaming agreements can be established between networks of many technologies, i.e. public land mobile networks (PLMN) according to the 3GPP (3^{rd} generation partnership project) such as UMTS (universal mobile telecommunication service) and non-3GPP networks such as WLAN (wireless local area networks).

As such, roaming agreements are unidirectional, i.e. they define a roaming relationship between a home network and a visited network. Usually, however, two networks negotiate a reciprocal pair of roaming agreements, where they agree to accept roaming subscribers from each other.

Roaming agreements are established in a two-phase process which conventionally is performed manually.

Firstly, a legally binding contract is negotiated.

Secondly, configuration information is exchanged and then the network elements involved in dealing with roaming subscribers are configured according to the contract and connection requirements. This second configuration step involves the following. As configuration information, addressing information is exchanged such as the IP addresses of the network elements sending traffic into the other network, e.g. AAA (Proxy) servers, SGSN, GGSN and DNS (domain name server). Other information exchanged may include the name of the GRX provider, the international SCCP (signalling connection and control part) gateway, the IMSI (international mobile subscriber identity) structure, the MSISDN (mobile subscriber integrated services digital network number) structure, the protocol versions (GPRS tunnel protocol, mobile application part,...) etc.

Moreover, the following examples of configurations may need to be performed. Firewalls and border gateways must be configured such that they let pass both signalling traffic (e.g. DNS queries, GTP, MAP, RADIUS, Diameter,...) and user-plane traffic. The network elements in the two networks must be enabled to locate each other (e.g. the AAA proxy server must locate the AAA server, the SGSN must locate the HLR and the GGSN, and the access router must locate the WLAN access gateway etc.). The localization information can be statically configured (e.g. in the access router) or it can be retrieved via the DNS. In this case, the DNS server in the visited network is given an entry that points to the DNS server in the home network. Furthermore, in case of HLR, each PLMN operator needs to inform their SCCP carriers and GRX providers so that they can correctly route and filter the roaming traffic.

Conventionally, roaming agreements are established on a bilateral basis. That is, two networks agree on a roaming agreement or a pair of reciprocal roaming agreements. The number of roaming agreements can however become rather large, and their establishment and maintenance can be rather costly.

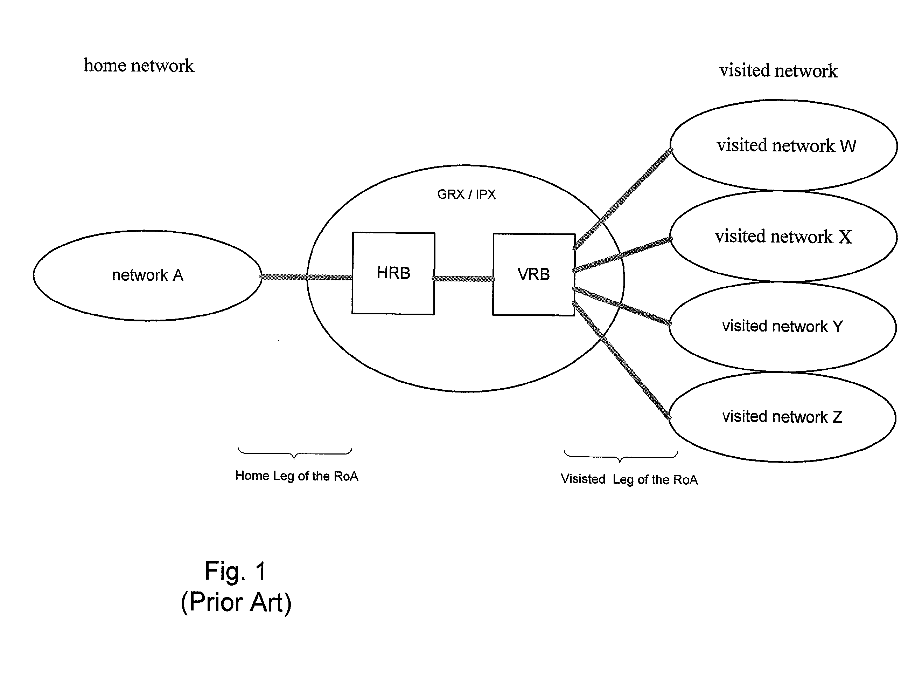

This problem is addressed by the concept of roaming brokers (RB). Roaming broker support the establishment of a multilateral roaming agreement as illustrated in Fig. 1. A visited RB (VRB) establishes several visited legs of a roaming agreement with a number of visited networks. The VRB is linked to a home RB (HRB), wherein HRB and VRB of course can be also co-located. Then, the home network and the HRB establish the home leg of the roaming agreement. This automatically leads to a multilateral roaming agreement of the home network with all (or a subset of the) visited networks the VRB has a contract with. In other words, the home network has the same contract with all visited networks, without the possibility to differentiate between them.

When roaming brokers are involved, the visited networks (in case of a PLMN a "VPLMN") are, to a large extent, invisible to the home networks (in case of a PLMN a "HPLMN"), since all traffic is proxied by the RB, and most business dealings (with the possible exception of billing) are performed with the RB. From the perspective of the HPLMN, the RB basically is the VPLMN. In other words, brokered roaming agreements lack what is called transparency.

The GRX, IPX, and the details of roaming agreement establishment are specified by the GSM association (GSMA).

### Summary of the Invention

Thus, it is an object of the present invention to enhance the prior art technology.

According to a first aspect of the present invention, this object is solved by an apparatus, comprising a negotiation controller for negotiating a roaming agreement between an originating network and a destination network; a rule generator generating rules according to a negotiated roaming agreement; and a configuration unit configured to implement configuration settings according to respective rules generated by the rule generator.

According to the first aspect of the present invention, one or more of the following modifications may apply.

The roaming agreement can be negotiated under consideration of policies specific to at least one of the originating network and the destination network, and the rule generator can be configured to generate the rules according to these policies.

The negotiation of the roaming agreement under consideration of policies can be configured to be performed automatically by the negotiation controller being configured to request at least whether policies of the originating network or the destination network apply.

The negotiation controller can be configured to request a policy decision point in which the policies are pre-stored by at least one of the originating network and the destination network, wherein the policy decision point can be comprised in the apparatus.

The negotiation controller can be configured to trigger the combination of a roaming agreement leg of the originating network with a roaming agreement leg of the destination network.

The apparatus can further comprise a network interworking control gateway functionality of a network.

The apparatus can further comprise a security association controller configured to establish a security association between the originating network and the destination network.

The network interworking control gateway functionality can be configured to directly exchange user traffic with a gateway functionality of another network.

The apparatus according to the first aspect of the present invention can be configured to be an apparatus for providing roaming broker functionality.

According to a second aspect of the present invention, the above object is solved by a system comprising an apparatus according to the first aspect of the present invention which further comprises a network interworking control gateway functionality of a network and which is configured to act as a gateway functionality of the originating network; and an apparatus according to the first aspect of the present invention which further comprises a network interworking control gateway functionality of a network and which is configured to act as a gateway functionality of the destination network.

Within the second aspect of the present invention, either one or both of the apparatuses according to the first aspect of the present invention may be modified to further comprise a security association controller configured to establish a security association between the originating network and the destination network, or so that the network interworking control gateway functionality is configured to directly exchange user traffic with a gateway functionality of another network.

Moreover, according to the second aspect of the present invention, one or more of the following modifications may apply instead or in addition.

The system can further comprise a network interworking control proxy configured to combine a roaming agreement leg of the originating network with a roaming agreement leg of the destination network upon a respective trigger by the negotiation controller of the apparatus according to the first aspect of the present invention which may or may not be modified as defined above and which is configured to act as a network interworking control gateway functionality of the originating network.

The system according to the second aspect of the present invention can be configured to be a system for providing roaming broker functionality.

According to a third aspect of the present invention, the above object is solved by a method comprising negotiating a roaming agreement between an originating network and a destination network; generating rules according to a negotiated roaming agreement; and implementing configuration settings according to respective rules generated.

According to the third aspect of the present invention, one or more of the following modifications may apply.

The roaming agreement can be negotiated under consideration of policies specific to at least one of the originating network and the destination network, and the rules are then generated according to these policies.

The roaming agreement can be automatically negotiated under consideration of policies by requesting by the negotiation controller at least whether policies of the originating network or the destination network apply.

The method can further comprise pre-storing the policies by at least one of the originating network and the destination network in a policy decision point, which is requested by the negotiation controller.

The method can further comprise triggering a combination of a roaming agreement leg of the originating network with a roaming agreement leg of the destination network.

The method can further comprise establishing a security association between the originating network and the destination network.

The network interworking control proxy can be triggered for the combination.

The method can further comprise directly exchanging user traffic between the originating network and the destination network.

The method according to the third aspect of the present invention may be performed so as to be a method of performing roaming brokerage.

According to a fourth aspect of the present invention the above object is solved by a computer program product embodied on a computer-readable medium, the computer program product configured to provide instructions to carry out a method according to the third aspect of the present invention or any one of its modifications.

According to a fifth aspect of the present invention the above object is solved by an apparatus, comprising means for negotiating a roaming agreement between an originating network and a destination network; means for generating rules according to a negotiated roaming agreement; and means for implementing configuration settings according to respective rules generated by said means for generating rules.

According to a sixth aspect of the present invention the above object is solved by a system comprising an apparatus according to the fifth aspect of the present invention which further comprises means for providing a network interworking control gateway functionality of a network and which is configured to act as a gateway functionality of the originating network; and an apparatus according to the fifth aspect of the present invention which further comprises means for providing a network interworking control gateway functionality of a network and which is configured to act as a gateway functionality of the destination network.

Thus, what is achieved according to the present invention is at least the following.

With the present invention, it is possible to establish individualized roaming agreements brokered by a roaming broker. Furthermore, the transparency of brokered roaming agreements can be significantly increased. In comparison to the prior art, the degree of automation is further enhanced. In addition, regarding an already established and configured roaming agreement, according to the present invention any changes even including termination such as regarding the configuration are more easily possible by also being highly automated.

### Brief Description of the Drawings

Further aspects, features and advantages of the present invention will become more fully apparent from the following detailed description of the preferred embodiments, when taken in conjunction with the appended drawings, in which:
Fig. 1 shows a multilateral roaming agreement established via a HRB and a VRB according to the prior art;
Fig. 2 shows individualized roaming agreements established via advanced HRB and VRB according to a first embodiment of the present invention;
Fig. 3 shows a detailed component view of the advanced roaming broker according to the first embodiment of the present invention including an illustration of the process for establishing an individualized roaming agreement;
Fig. 4 shows network architecture with NICO proxy and NICO gateway for the example of a bilateral roaming agreement according to a second embodiment of the present invention;
Fig. 5 shows the internal structure of a NICO gateway as well as a corresponding process for establishing a brokered, transparent roaming agreement with the help of NICO gateway and NICO proxy according to the second embodiment of the present invention;
Fig. 6 shows the internal architecture of the NICO gateway according to the second embodiment of the present invention in more detail; and
Fig. 7 shows the internal architecture of the NICO proxy according to the second embodiment of the present invention.

### Detailed Description of the preferred Embodiments

In the following, description will be made to what are presently considered to be preferred embodiments of the present invention. It is to be understood, however, that the description is given by way of example only, and that the described embodiments are by no means to be understood as limiting the present invention thereto.

For example, the present invention is applicable to mobile networks such as PLMN, but also to other mobile networks such as WLAN (wireless local area network) and WIMAX (worldwide interoperability for microwave access).

Even to fixed networks, the present invention could be applied where e.g. services provided outside the fixed network are to be made available for the users of the fixed network so that the users may "roam" to these "outside" provided services. Hence, also in these cases a roaming agreement will be necessary and the present invention may be applied in a beneficial way.

Nevertheless, in the following the present invention is described by way of example with respect to PLMN. However, as indicated above, the present invention is not limited thereto.

### First Embodiment

With respect to the conventionally brokered roaming agreements, it is considered according to the first embodiment of the present invention that the home network operator has too little control over which visited network he is going to have a roaming agreement with. That is, the roaming agreement is established with all or - in some cases - a subset of visited networks affiliated with the VRB. Further, the flexibility regarding the terms and conditions of the multilateral roaming agreements is reduced compared to bilateral roaming agreements. In addition, the manual establishment process is considered to be costly.

To overcome these problems, with the first embodiment of the present invention the home network and visited network(s) are involved in the decision and configuration of the roaming agreement brokered by advanced roaming brokers. The result is an individualized roaming agreement that can be bilateral or multilateral, i.e. set between one HPLMN and several VPLMN or vice-versa.

In the following, this is described in more detail.

By referring again to Fig. 1, the VRB maintains multiple "one leg" roaming agreements (solid bold line) with visited networks W, X, Y, Z and the HRB maintains the home leg with the home network. How these legs are established is not subject of the invention.

However, once the legs are in place, a multilateral roaming agreement is not automatically established. Rather, the home network and the visited network determine which bilateral or multilateral roaming agreements should be established, brokered by the roaming brokers. It is also possible to individualize some parameters of the roaming agreement at this stage, e.g. inter operator tariffs (IOT) or services offered.

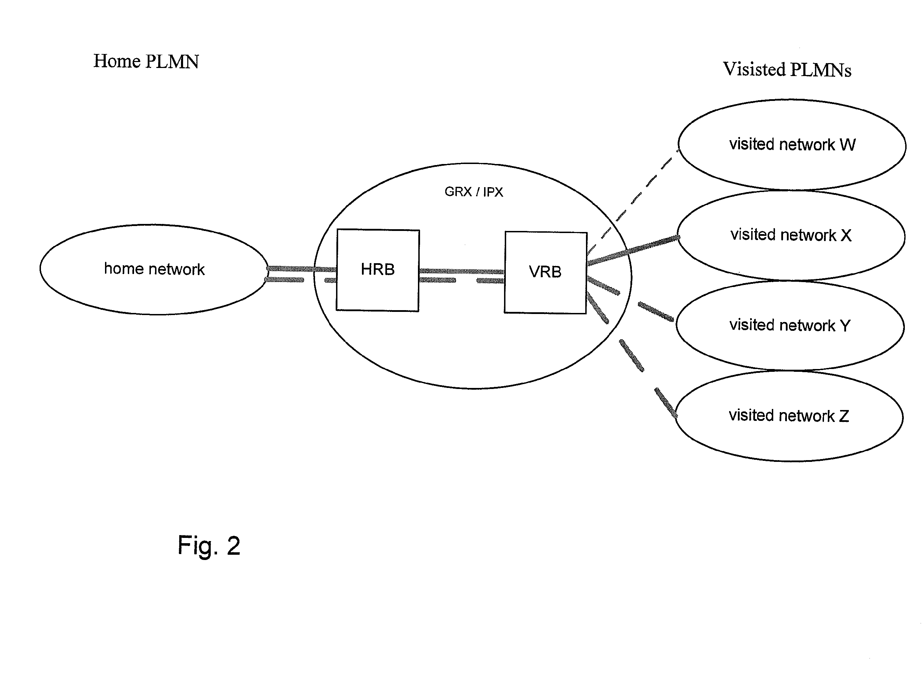

In Fig. 2 a possible result is illustrated. The home network has one bilateral roaming agreement (solid bold line) with network X, with terms and conditions specific to network X, and a different, multilateral roaming agreement (broken solid line) with networks Y and Z. The home network does not have a roaming agreement (light broken line) with network W.

This is achieved with advanced roaming brokers according to the first embodiment of the present invention with which several degrees of flexibility and automation can be implemented. For example:
(1) Both phases of roaming agreement establishment can be performed manually. That is, the networks (i.e. PLMN) determine which roaming agreements are desired in an off-line process, and the RB owner configures the roaming broker accordingly.
(2) The configuration phase in the roaming brokers is automated.
(3) The networks are able to choose their roaming-partner network in an online process, e.g. via a web-interface with the RB.

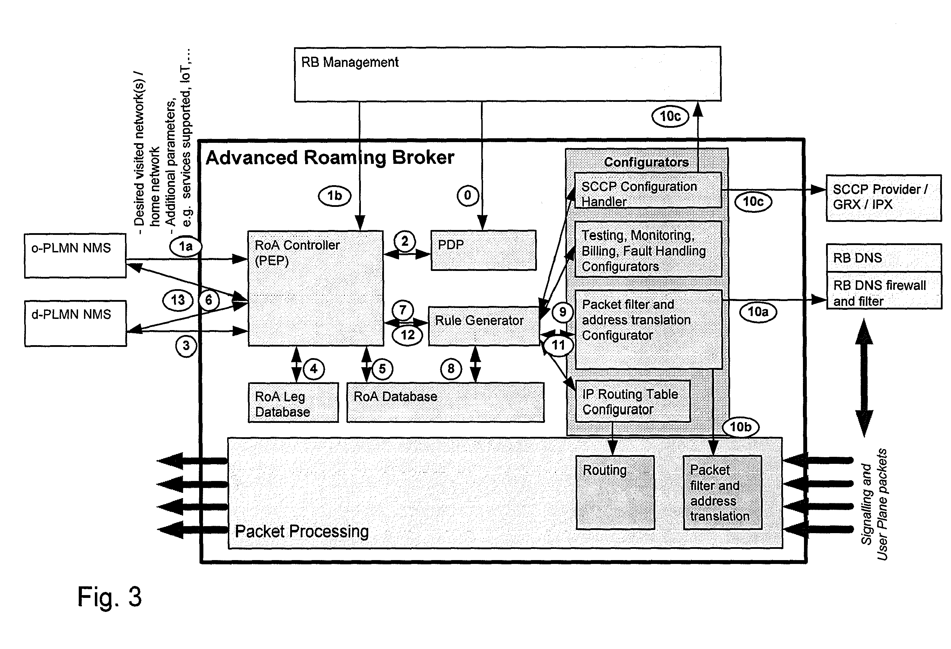

Described below is a possible implementation example of a combination of versions (2) and (3), which is illustrated in Fig. 3. Herein, it is assumed a collocation of HRB and VRB, and that the PLM networks forming the roaming agreement are UMTS networks.

Furthermore, for simplifying the description and illustration, it is concentrated on the difference between a conventional RB and an advanced RB according to the present embodiment, i.e. other implementation details are not shown, but considered to be apparent to a skilled person.

On a high level, there is a difference in a roaming agreement controller (RoA Controller) that can combine roaming agreement legs to form roaming agreements. In addition, the roaming agreement controller triggers that rules are generated such that only the selected roaming agreement is configured.

The advanced roaming broker and the related roaming agreement establishment process are described herein below in detail by referring to Fig. 3.

In advance, the management of the RB may configure policies in a policy decision point (PDP) governing the roaming agreement establishment process (step 0).

The PLMN network management system (NMS) of an originating PLMN (oPLMN) (step 1a) or the RB management (step 1b) triggers the roaming agreement controller that a roaming agreement is formed between the oPLMN and (a) destination PLMN(s) (dPLMN). The trigger includes as information the identifier of the dPLMN(s) with which the individualized roaming agreement should be formed, and whether the oPLMN should become HPLMN or VPLMN or both. Additional roaming agreement specific information could also be included such as a particular IOT or which services are covered by this roaming agreement. It is also possible to include several options (e.g. a service set #1 and IOT #1 or a service set #2 and IOT #2). This allows some degree of flexibility in adapting the roaming agreement to a particular partner thus addressing the above mentioned respective problem. This step can be performed via signalling or manually.

The roaming agreement controller is a policy enforcement point (PEP). It consults the PDP whether policies apply for this particular pair of HPLMN and VPLMN(s) and enforces these policies (step 2).

The roaming agreement controller informs the NMS of the dPLMN(s) of the plan to install an individualized roaming agreement, wherein also this step can be performed manually. At this point, the dPLMN can also choose between options (whenever applicable). Roaming agreement establishment only proceeds with those dPLMNs that confirm (step 3).

The roaming agreement controller pulls the respective roaming agreement legs from the roaming agreement leg repository (step 4). Here, a "leg" shall designate an openended roaming agreement of a particular network (with some other network), wherein it may be considered that a "full" roaming agreement comprises two of such legs. In a physical sense, the leg may be considered to correspond to a part of an inter-network connectivity which may already be present, but which is not authorized for use without an established roaming agreement. As long as there is no actual roaming agreement established, the leg is only virtually present. It is to be noted that in the prior art, a roaming broker comprised a predetermined set of such legs which was applied with the roaming broker. However, according to the present embodiment, two specific legs according to a respective network pair are selected out of a plurality of predefined (on a low level) legs in the roaming agreement leg repository.

The roaming agreement controller forms the individualized roaming agreement by combining the selected specific legs, by including the names of oPLMN and dPLMN(s) and possible additional information that was included in the trigger, and by considering the previously pulled policies. Then, the roaming agreement is stored. This can be done in the roaming agreement database or in another suitable element (step 5).

The roaming agreement controller informs the respective NMS of oPLMN and dPLMN(s) of the newly formed roaming agreement. If the terms and conditions are acceptable, oPLMN and dPLMN confirm. The first phase of roaming agreement establishment, the negotiation phase, is now concluded (step 6). Of course, if there is no acknowledgement of any concerned network, there will be no roaming agreement establishment at all. For the receipt of any such acknowledgment, a time-out can be implemented after which the procedure is terminated (for the concerned network).

Then, the second phase of roaming agreement establishment, the configuration phase, starts. To this end, the roaming agreement controller informs the rule generator of the newly formed roaming agreement (step 7).

The rule generator pulls the roaming agreement from the roaming agreement database and works out all configuration parameters, filter rules, firewall settings etc. (step 8).

The rule generator distributes the configuration to a number of specialized functional blocks inside the RB, the configurators. For example, rules for testing the roaming agreement, for billing, monitoring and clearing are passed to the respective configurator responsible for the configuration of the testing, billing, monitoring and fault handling entities (step 9).

The packet filter and address translation configurator updates the firewall and the packet filter for the DNS of the RB such that oPLMN and dPLMN can make DNS inquiries about each other. At the same time, DNS inquiries about oPLMN and dPLMN originating from another PLMN W (see Fig. 2) will not be answered, except if PLMN X (see Fig. 2) has its own roaming agreements with oPLMN and dPLMN. It is to be noted that it is assumed here that the DNS entries themselves have already been configured when then individual legs of the roaming agreement were agreed. Also the packet filter and address translation in the RB itself are updated (step 10a).

The IP routing table configurator configures the IP routing table of the RB such that it appropriately routes packets between oPLMN and dPLMN (step 10b).

The SCCP configuration handler configurator triggers the RB management to inform the SCCP carrier and/or GRX about the new roaming agreement such that it can correctly route and filter the traffic. If the SCCP carrier / GRX provides an interface for automatic configuration that can of course also be used. Alternatively, all SCCP configurations may already have been carried out when the individual legs of the roaming agreement were first established (step 10c).

Once the configurations and the testing, respectively, of the roaming agreement have been carried out, the individual configurators return an acknowledgement to the rule generator (step 11).

Once the rule generator received all acknowledgements, it sends its own acknowledgement to the roaming agreement controller (step 12).

The roaming agreement controller informs the NMS of oPLMN and dPLMN that the roaming agreement is established (step 13).

Moreover, a slight modification of the procedure described above could be used for updating existing roaming agreements. In this case, all steps refer to an existing roaming agreement, and in step 5, an existing roaming agreement is updated rather than a new roaming agreement is formed.

Furthermore, also the termination of a roaming agreement either before the actual establishment or after the actual establishment can be considered as just another form of "agreement making" and/or updating/changing an existing agreement, and thus should be considered as being included in the above description.

While above the collocated example is described, the following applies for the modification when HRB and VRB are not collocated. In this case, they are assumed to have a trusted relationship. Compared to the process described above, the additional problems to be solved are that the RB of the oPLMN needs to find the RB of the dPLMN. Since the roaming brokers are assumed to have a trusted relationship, they will know each other. A variety of mechanisms is conceivable for finding the RB of the dPLMN, for example, the RB of the oPLMN can check with itself and then with all other RB whether they have the "missing leg" of the roaming agreement, or a DNS-based mechanism is used. Moreover, the legs of the roaming agreement are in different roaming broker and the configuration must be performed in both RB. In this case, one RB, e.g. the RB of the oPLMN, can take over the task of combining the two legs to form the complete roaming agreement. This roaming agreement is passed to the RB of the dPLMN. Then, the process proceeds as before. Both RB generate rules and configure the roaming agreement.

The internal structure of the advanced RB and the process described above are in principle the same, when one or both of the PLMN are of a different technology, e.g. WLAN. The difference lies in the absence of some of the configurators (e.g. the SCCP configuration handler) and possible additional configurators, for example a configurator for policy rules in an AAA proxy.

The advanced RB can also be used to adapt already existing individualized roaming agreements, e.g. for updating IOT or services covered by the roaming agreement.

Thus, according to the first embodiment of the present invention, at least the following advantages are achieved.

The problems of conventional multilateral roaming agreements described above are overcome. The PLMN operators using roaming agreements brokered by RB regain control over which PLMN they have a roaming agreement with. The terms and conditions of the individualized roaming agreement can be dynamically adapted at any time. The establishment process can to a large extent be automated. At the same time, the drawbacks of conventional bilateral roaming agreements are avoided. Compared to conventional bilateral roaming agreements, each PLMN only once establishes one (one-leg) roaming agreement with an RB. The RB is the only communication partner for the PLMN, and only a trusted relationship needs to be established with the RB. The roaming brokers are responsible for configuring the actual individualized roaming agreements by linking the individual legs of the roaming agreements. Moreover, according to the first embodiment of the present invention, the principle structure of the RB is the same, independent of the type of network (such as UMTS, GSM, WLAN, WiMAX,...).

Thus, according to the above described first embodiment there is provided an augmented method and device that allow establishing of roaming agreements brokered by an RB. Here, the home network and visited network(s) are involved in the decision and configuration of the roaming agreement brokered by roaming broker(s). The result is an individualized roaming agreement that can be bilateral or multilateral, i.e. between one HPLM and several VPLMN or vice-versa. Particularly, the VRB maintains multiple "one leg" roaming agreements with visited networks W, X, Y, Z (see Fig. 2) and the HRB maintains the home leg with the home network. However, a multilateral roaming agreement is not automatically established. Rather, the home network and the visited network determine which bilateral or multilateral roaming agreements should be established, brokered by the roaming broker(s). The roaming broker(s) combine the individual roaming agreement legs to form a complete roaming agreement. It is also possible to individualize some parameters of the roaming agreement at this stage, e.g. IOT or services offered. Fig. 2 presents a possible result. The home network has one bilateral roaming agreement with network X, with terms and conditions specific to network X, and a different, multilateral roaming agreement with networks Y and Z. The home network does not have a roaming agreement with network W.

### Second Embodiment

However, in any case, when roaming brokers (RB) are involved, the visited networks are, to a large extent, invisible to the home network. That is, all traffic is proxied by the roaming brokers, and most business dealings (with the possible exception of billing) are performed with them.

On the other hand, at the same time the GSMA/operators require that transparency is provided.

Accordingly, there is a further problem of roaming agreements brokered by roaming brokers that the visited network is fully or partly invisible to the home network (and vice versa), since user traffic and signalling traffic is proxied by an RB. This leads to increased latency and increases the possibility of errors. Furthermore, operators require transparency. That is, the operator should know when and how it is dealing with which other operators.

Another problem is the overhead incurred today with the installation of roaming agreements. Conventionally, roaming agreements are manually established. It takes several months for them to become active. In addition, also updates of a roaming agreement, e.g. for adding a new service, take very long.

According to the second embodiment of the present invention, there is provided method and devices to the effect that home network and visited network are no longer invisible to each other, and traffic is directly exchanged between them, thus reducing latency and the possibility of errors. At the same time the advantages of establishing the roaming agreement via an RB are maintained. Furthermore, the process becomes automated to an extent that roaming agreement establishment - and updates to existing roaming agreements - are realized quickly and cost-efficiently.

The basic idea is splitting the roaming agreement establishment into a negotiation phase and a realization phase. The negotiation of the roaming agreement is brokered by the RB (in connection with the second embodiment hereinafter called NICO proxy; NICO: network interworking control) as usual. However, then the NICO proxy pulls out of the procedure and hands over to NICO gateways located in both home network and visited network. The NICO gateways orchestrate the realization phase by triggering the local configuration of DNS, security gateways, firewalls etc. according to the requirements of the roaming agreement. As a result, the NICO proxy (i.e. the RB) is minimally involved in the actual usage of the roaming agreement. User traffic and signalling traffic are directly exchanged between visited network and home network (over the GRX/IPX). It is to be noted that the term "network interworking control" is used to illustrate the network interworking nature of the procedure and thus provided for convenience of description. However, beyond this functionality (which is rather a configuration than an operation), no limitation is intended.

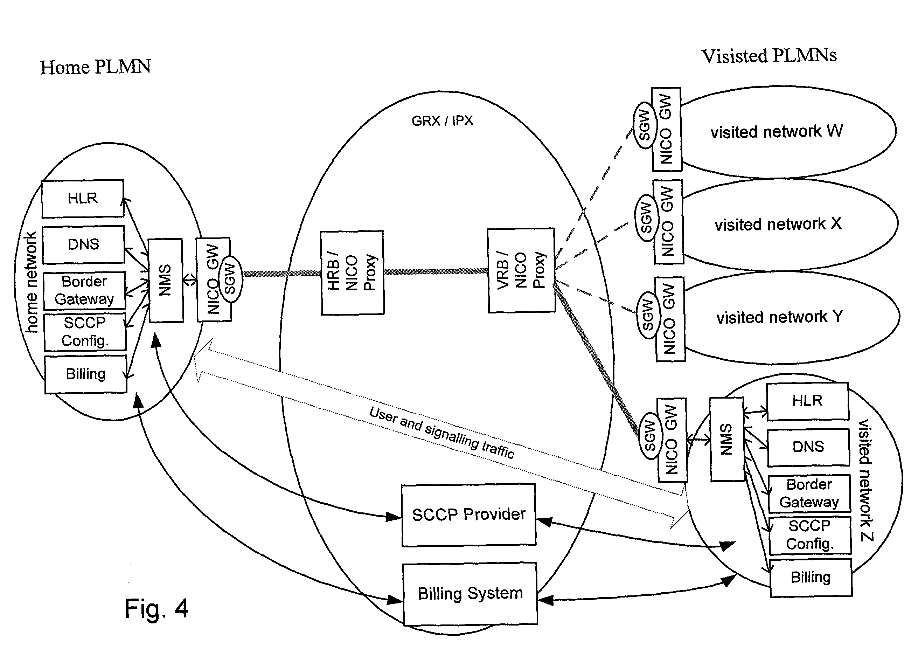

The resulting network architecture is illustrated in Fig. 4 by means of the example of a bilateral roaming agreement (solid bold line, compare with Fig. 2).

An implementation of the second embodiment of the present invention then comprises a network interworking control gateway (NICO GW) in both visited network and home network, and an augmented RB called NICO proxy.

The NICO GW negotiates, on behalf of its network, the roaming agreement with the NICO proxy based on previously established roaming agreement legs. When the roaming agreement is agreed, the NICO proxy triggers the respective NICO GW in all networks participating in the roaming agreement to realize the roaming agreement based on configuration information available in the roaming agreement. The respective NICO GW generates rules for configuration and accordingly triggers the configuration of the network elements in its network, e.g. DNS and firewalls. Some configurations apply to entities outside the network, e.g. the billing system and the SCCP provider.

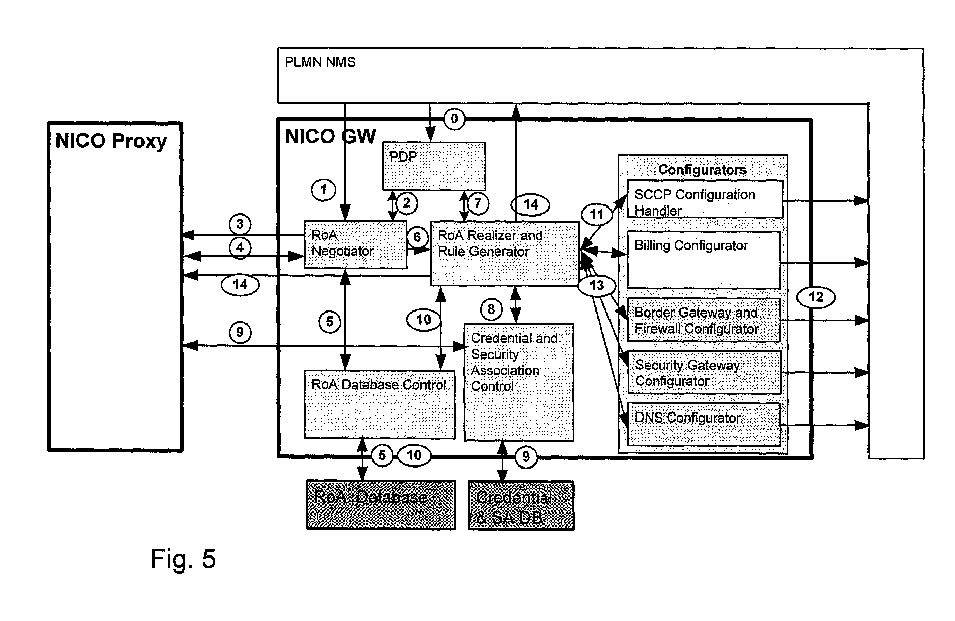

Fig. 5 illustrates the internal structure of the NICO GW and the steps involved in the roaming agreement establishment. The NICO GW is located in a PLMN A. For the sake of explanation, it shall be assumed that PLMN A originates the request for roaming agreement establishment. Furthermore, it shall be assumed that the NICO proxy has already stored the "legs" of the roaming agreements.

Specifically, the Management of the NICO GW may configure policies in a policy decision point (PDP) governing the roaming agreement establishment process (step 0).

The PLMN network management system (NMS) of the NICO proxy triggers the roaming agreement negotiator in the NICO GW of PLMN A that a roaming agreement is to be formed between PLMN A as the originating PLMN (oPLMN), and (a) destination PLMN(s) (dPLMN). The trigger includes as information the identifier of the dPLMN(s) with which the individualized roaming agreement should be formed, and whether PLMN A should become HPLMN or VPLMN or both (step 1).

Additionally, information could also be included roaming agreement specific, although this information could also come from a policy engine, e.g. a particular IOT (inter operator tariff), or which services are covered by this roaming agreement. It is also possible to include several options (e.g. service set #1 / IOT #1 or service set #2 and IOT #2) .

The roaming agreement negotiator is a policy enforcement point (PEP). It consults the PDP whether policies apply for this particular pair of HPLMN and VPLMN(s) and enforces these policies. The policies may add additional information (see above). The roaming agreement negotiator may also involve a human in the decision (step 2). Unless policies or human interaction result in an abortion of the process, it is proceeded to step 3.

The roaming agreement negotiator triggers the NICO proxy to establish a roaming agreement. It includes the information collected so far, i.e. PLMM identities, IOT, etc. (step 3).

The NICO proxy forms the individualized roaming agreement by combining the legs, by including the names of oPLMN and dPLMN(s) as well as possible additional information that was included in the trigger. For details, reference is made to the respective description of the first embodiment. Then, the NICO proxy informs the roaming agreement negotiator of the NICO GW in PLMN A and the NMS/NICO gateway(s) of the other PLMN(s) involved in the roaming agreement of the newly formed roaming agreement. If the terms and conditions are acceptable, oPLMN and dPLMN confirm (step 4). Of course, if there is no acknowledgement of any concerned network, there will be no roaming agreement establishment at all. For the receipt of any such acknowledgment, a time-out can be implemented after which the procedure is terminated (for the concerned network).

The roaming agreement negotiator contacts the roaming agreement database control to store the roaming agreement in the roaming agreement database. The first phase of roaming agreement establishment, the negotiation phase, is now concluded (step 5).

The second phase of roaming agreement establishment, the realization phase, starts. To this end, the roaming agreement negotiator informs the roaming agreement realizer and rule generator (rule generator in short) of the newly formed roaming agreement (step 6).

The rule generator pulls policies from the PDP (step 7).

The rule generator triggers the credential and security association control to establish a security association between the operators (step 8).

In the present example, the NICO proxy acts as a trusted third party brokering the exchange of credentials. The credentials are stored in the credential and security association database (step 9).

The rule generator pulls the roaming agreement from the roaming agreement database and works out all configuration parameters, DNS entries (if necessary), firewall settings etc. It also compiles the information to be sent to the billing system and the SCCP provider (step 10).

The rule generator distributes the configurations to configurators (step 11).

The configurators interface with the NMS so that the corresponding configurations are performed. Alternatively, the configurators can interface directly with the network entities to be configured (step 12).

Examples of configurations are described in the following.

The SCCP carrier and/or GRX are informed about the new roaming agreement such that it can correctly route and filter the traffic. If the SCCP carrier/GRX provides an interface for automatic information, that can of course also be used. It is also conceivable that the NICO proxy provides a unified interface to the SCCP carrier/GRX.

The (possibly external) billing system of the new roaming agreement is informed. This may have to happen via human interaction or via an electronic interaction directly with the billing system.

The border gateway and firewalls are configured, the security gateway is configured with the appropriate keys, and, unless the GRX provides a root DNS, the operators DNS is configured such that it can resolve the DNS of the dPLMN(s).

Once the configurations of the roaming agreement have been carried out, the individual configurators return an acknowledgement to the rule generator (step 13).

Once the rule generator received all acknowledgements, it sends its own acknowledgement to the roaming agreement PLMN NMS and the NICO proxy that the roaming agreement has been established (step 14).

It is to be remarked that in the alternative that another PLMN would originate the request, the NICO proxy would ask the NICO GW to participate in the establishment of the roaming agreement.

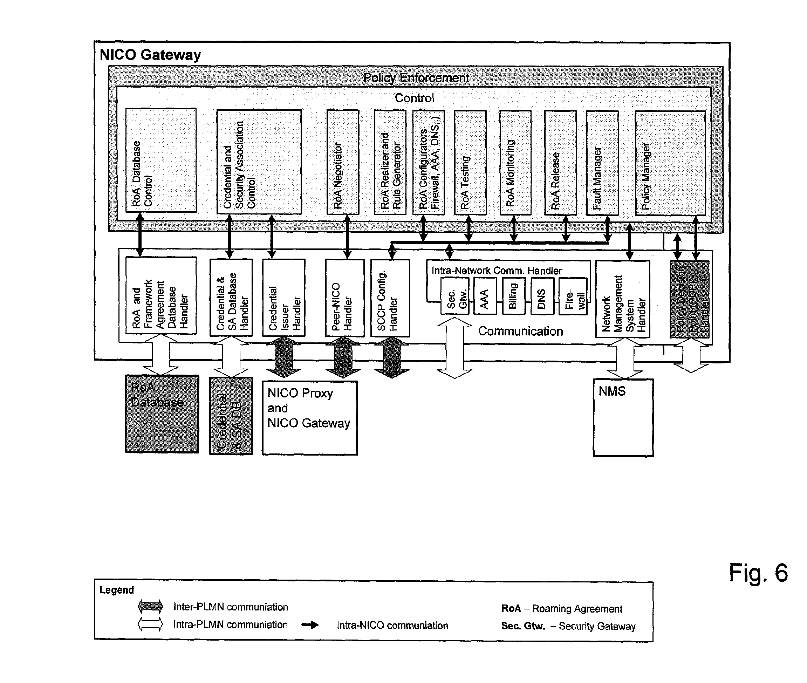

Fig. 6 illustrates the internal structure of a NICO GW according to the second embodiment of the present invention in further detail. It shows a control block including all control functions as described above, and a communication block, including handlers for the communication with outside entities. The communication between control entities and communication entities is explicitly shown. It is assumed that the entities in the control block can all communicate among themselves. Particularly, control blocks are included for the testing, monitoring and release of the roaming agreement as well as for fault management.

It is to be noted that the NICO gateway can be a standalone apparatus as well as an implemented functionality e.g. in NMS.

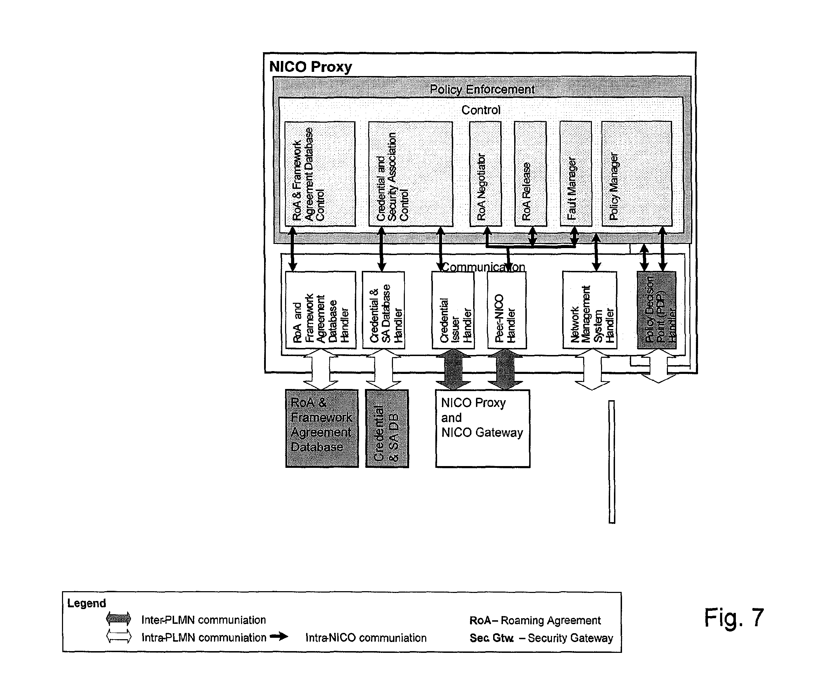

Fig. 7 illustrates the internal structure of the NICO proxy according to the same approach, wherein the description of its elements results from the above description in connection with Fig. 5.

The process and the devices described above do not depend on the technology of the network, e.g. UMTS or WLAN.

Moreover, a slight modification of the procedure described above could be used for updating existing roaming agreements. In this case, all steps refer to an existing roaming agreement, and in step 4, an existing roaming agreement is updated rather than a new roaming agreement is formed.

Furthermore, also the termination of a roaming agreement either before the actual establishment or after the actual establishment can be considered as just another form of "agreement making" and/or updating/changing an existing agreement, and thus should be considered as being included in the above description.

The second embodiment of the present invention provides the following advantages. The "transparency problem" of brokered roaming agreements is solved. User traffic and signalling traffic is exchanged directly between respective PLMN, thus avoiding latency and error causes. The operators know with which PLMN they are dealing with. At the same time, the second embodiment of the present invention maintains the advantage of brokered roaming agreements. That is, the negotiation of the roaming agreement is dealt with by the NICO proxy based on pre-established roaming agreement legs. This way the overhead for roaming agreement establishment is reduced. The GRX/IPX operator keeps a customer (here, a PLMN) by offering flexible (automated and simplified) roaming agreement negotiation as service. Furthermore, the entire process is automated, thus eliminating costs due to manual configuration, and speeding up the establishment process. Finally, the same devices and procedures can be used for updating existing roaming agreements.

### Modification of second embodiment

While above is described the case, where a NICO proxy is involved in the roaming agreement establishment/adaptation procedure, the second embodiment may also be implemented without the NICO proxy. In this case, the NICO gateways take over the respective tasks of the NICO proxy, i.e. the corresponding elements of the NICO gateway perform these tasks (see respective description of the advanced roaming broker according to the first embodiment). Thus, the modification of the second embodiment allows the automatic negotiation of roaming agreements without involvement of a roaming broker.

An implementation of embodiments of the present invention may be achieved by providing a computer program product embodied as a computer readable medium which stores instructions according to the above described embodiments.

Thus, according to preferred embodiments of the present invention there is described above an apparatus for proving roaming broker functionality. The apparatus comprises a negotiation controller for negotiating a roaming agreement between an originating network and a destination network. The apparatus further comprises a rule generator generating rules according to a negotiated roaming agreement, and a configuration unit configured to implement configuration settings according to respective rules generated by the rule generator.

What is described above is what is presently considered to be preferred embodiments of the present invention. However, as is apparent to the skilled reader, these are provided for illustrative purposes only and are in no way intended to that the present invention is restricted thereto. Rather, it is the intention that all variations and modifications be included which fall within the spirit and scope of the appended claims.

## Claims

1. An apparatus, comprising:
a negotiation controller for negotiating a roaming agreement between an originating network and a destination network;
a rule generator generating rules according to a negotiated roaming agreement; and
a configuration unit configured to implement configuration settings according to respective rules generated by the rule generator.

2. The apparatus according to claim 1, wherein
the roaming agreement is negotiated under consideration of policies specific to at least one of the originating network and the destination network, and
the rule generator is configured to generate the rules according to these policies.

3. The apparatus according to claim 2, wherein
the negotiation of the roaming agreement under consideration of policies is configured to be performed automatically by the negotiation controller being configured to request at least whether policies of the originating network or the destination network apply.

4. The apparatus according to claim 3, wherein
the negotiation controller is configured to request a policy decision point in which the policies are pre-stored by at least one of the originating network and the destination network, and wherein
the policy decision point is comprised in the apparatus.

5. The apparatus according to any one of claims 1 to 4, wherein
the negotiation controller is configured to trigger the combination of a roaming agreement leg of the originating network with a roaming agreement leg of the destination network.

6. The apparatus according to claim 5, further comprising
a network interworking control gateway functionality of a network.

7. The apparatus according to claim 6, further comprising
a security association controller configured to establish a security association between the originating network and the destination network.

8. The apparatus according to claim 5 or claim 6, wherein
the network interworking control gateway functionality is configured to directly exchange user traffic with a gateway functionality of another network.

9. A system comprising:
an apparatus according to any one of claims 6 to 8 configured to act as a gateway functionality of the originating network; and
an apparatus according to any one claims 6 to 8 configured to act as a gateway functionality of the destination network.

10. The system according to claim 9, further comprising
a network interworking control proxy configured to combine a roaming agreement leg of the originating network with a roaming agreement leg of the destination network upon a respective trigger by the negotiation controller of the apparatus according to any one of claims 6 to 8 configured to act as a network interworking control gateway functionality of the originating network.

11. A method comprising:
negotiating a roaming agreement between an originating network and a destination network;
generating rules according to a negotiated roaming agreement; and
implementing configuration settings according to respective rules generated.

12. The method according to claim 11, wherein
the roaming agreement is negotiated under consideration of policies specific to at least one of the originating network and the destination network, and
the rules are generated according to these policies.

13. The method according to claim 12, wherein
the roaming agreement is automatically negotiated under consideration of policies by requesting by the negotiation controller at least whether policies of the originating network or the destination network apply.

14. The method according to claim 13, further comprising
pre-storing the policies by at least one of the originating network and the destination network in a policy decision point, which is requested by the negotiation controller.

15. The method according to any one of claims 11 to 14, further comprising:
triggering a combination of a roaming agreement leg of the originating network with a roaming agreement leg of the destination network.

16. The method according to claim 15, further comprising
establishing a security association between the originating network and the destination network.

17. The method according to any one of claims 11 to 16, wherein
a network interworking control proxy is triggered for the combination.

18. The method according to any one of claims 11 to 17, further comprising
directly exchanging user traffic between the originating network and the destination network.

19. A computer program product embodied on a computer-readable medium, the computer program product configured to provide instructions to carry out a method according to any one of claims 11 to 18.
